# EUROPÄISCHE PATENTSCHRIFT

(11) **EP 2 164 751 B1**
(45) Veröffentlichungstag und Bekanntmachung des Hinweises auf die Patenterteilung: **02.11.2016**
(21) Anmeldenummer: 08758738.2
(22) Anmeldetag: 23.05.2008
(51) Int. Cl.: B62M 7/02, F02B 61/02

(54) **MOTORRAD**
MOTORBIKE
MOTOCYCLETTE

(30) Priorität: 05.06.2007 DE 102007026103
(43) Veröffentlichungstag der Anmeldung: 24.03.2010
(73) Patentinhaber: KTM AG, 5230 Mattighofen (AT)
(72) Erfinder: MATSCHL, Gerald, A-5230 Mattighofen (AT); ELMWALL, Jens, Emil, S-591 97 Motala (SE)
(74) Vertreter: Söllner, Udo
(86) Internationale Anmeldenummer: PCT/EP2008/004146
(87) Internationale Veröffentlichungsnummer: WO 2008/148471

(56) Entgegenhaltungen:
- EP-A- 0 602 591
- WO-A-99/56997
- FR-A- 2 405 860
- JP-A- 60 093 128
- JP-A- 60 116 825
- US-A1- 2006 283 418

## Beschreibung

Die vorliegende Erfindung betrifft ein Motorrad mit einem Rahmen und einem Vorderrad sowie einem Hinterrad und einer Brennkraftmaschine mit mindestens einem Zylinder und einer Kurbelwelle sowie einem mit der Brennkraftmaschine gekoppelten Getriebe mit einer Getriebeeingangswelle und einer Getriebeausgangswelle nach dem Oberbegriff des Anspruchs 1.

Bei dem hier zur Rede stehenden Motorrad kann es sich insbesondere um ein auch zur Fahrt im unbefestigten Gelände vorgesehenes Motorrad handeln, welches auch zu sportlichen Einsatzzwecken, wie beispielsweise Wettbewerben oder dergleichen verwendet werden kann. Ein solches Motorrad wird auf befestigtem Untergrund und auch im unbefestigten Gelände sehr dynamisch bewegt, was insbesondere bei sportlichem Einsatz oder bei Wettbewerbszwecken der Fall sein kann. Bei der Brennkraftmaschine des Motorrads handelt es sich insbesondere um einen nur mit einem Zylinder ausgestatteten Motor.

Wird ein bekanntes, gattungsgemäßes Motorrad, wie es vorstehend beschrieben worden ist, entsprechend sportlich bewegt, so soll es sich durch ein neutrales Fahrverhalten auszeichnen derart, dass beispielsweise aufgrund der Bodenbeschaffenheit oder der Fahrstrecke auftretende Bremsvorgänge und anschließende Beschleunigungsvorgänge nicht zu einem ungünstigen Lastwechselverhalten führen und der Fahrer das Motorrads nicht dadurch zusätzlich belastet wird, dass er das Lastwechselverhalten beispielsweise durch entsprechenden Körpereinsatz ausgleichen muss. Auch soll sich das Motorrad bei der Kurvenfahrt neutral verhalten, also weder zum Untersteuern, noch zum Übersteuern neigen.

Da ein solches Motorrad sowohl für die Fahrt auf befestigten Straßen als auch für die Fahrt im unbefestigten Gelände vorgesehen ist, kann es auch lange Federwege aufweisen, die das Lastwechselverhalten des Motorrads aber nicht negativ beeinflussen sollen.

Wird mit einem solchen Motorrad beispielsweise ein Sprung durchgeführt, so soll der Fahrer des Motorrads nach Möglichkeit auch noch während der Flugphase Einfluss auf das Verhalten des Motorrads nehmen können.

Wird nun die Eigenbewegung des Motorrads bei der Fahrt betrachtet, so führt das Motorrad angeregt durch beispielsweise Bodenunebenheiten oder Gasgeben beziehungsweise Gaswegnehmen durch den Fahrer eine Bewegung mit seinem Schwerpunkt in Richtung der Fahrzeughochachse aus, der Schwerpunkt des Motorrads bewegt sich also nach oben und nach unten und zusätzlich führen die Anregungen durch beispielsweise die vorstehend erwähnten Bodenunebenheiten zu einer Drehbewegung des Motorrads um die durch den Schwerpunkt gehende Querachse.

Die von der Brennkraftmaschine bereitgestellte Antriebsenergie wird für die Vorwärtsbewegung des Motorrads eingesetzt, aber auch die Drehbewegung des Motorrads um die Querachse benötigt entsprechende Energie. Kann es nun erreicht werden, dass die für die Durchführung der Drehbewegung des Motorrads um die Querachse benötigte Energie verringert wird, so führt ein dazu eingesetzter vorbestimmter Energieanteil zu einem schnelleren Abschluss der Drehbewegung beziehungsweise bei der Betrachtung des Motorrads als geschlossenes System ist weniger Energiebedarf notwendig, um die Drehung durchzuführen, so dass ein größerer Anteil der im System herrschenden Energie für die Vorwärtsbewegung des Motorrads eingesetzt werden kann.

Der für den Abschluss der Drehbewegung benötigte Energieaufwand wird geringer, je weniger träge Masse des Motorrads um die durch den Schwerpunkt des Motorrads verlaufende Querachse beschleunigt werden muss. Bekannte Motorräder sind nicht unter diesem Gesichtspunkt ausgelegt.

Ein aufgrund der Masse das Drehverhalten des Motorrads um die Querachse beeinflussendes Bauteil ist die Kurbelwelle des Motorrads, da das Massenträgheitsmoment des Motorrads um die Querachse mit zunehmendem Abstand der Kurbelwelle vom Schwerpunkt des Motorrads ansteigt.

Bekannte Motorräder weisen eine Brennkraftmaschine mit einer Kurbelwelle auf, die sich möglichst tief entlang der Hochachse des Motorrads angeordnet befindet, um dadurch den Gesamtschwerpunkt des Motorrads abzusenken. Befinden sich aber beispielsweise aufgrund des Kraftstoffvolumens des Motorrads, insbesondere bei einem Satteltank oberhalb des im Rahmendreieck liegenden Schwerpunkts des Motorrads, eine Masse weit von der Kurbelwelle entfernt, so kann die beabsichtigte Absenkung des Schwerpunkts des Motorrads nur unvollständig erreicht werden, das Rotationsträgheitsmoment des Motorrads um die Querachse durch den Schwerpunkt aber bleibt bestehen.

Bekannte Motorradkonzepte sind nicht unter diesem Gesichtspunkt ausgelegt, sondern versuchen nur durch eine tief unten im Rahmendreieck angeordnete Kurbelwelle der Brennkraftmaschine den Schwerpunkt abzusenken.

Anhand der EP 0 218 493 ist ein mit einem Fahrradpedalantrieb ausgestattetes Motorfahrrad bekannt geworden, welches eine Zweitaktbrennkraftmaschine aufweist mit einer Kurbelwelle, die im Rahmen des Motorfahrrads höher angeordnet ist, als dies bei bekannten Motorradkonzepten der Fall ist. Durch diese Anordnung der Brennkraftmaschine bei dem bekannten Motorfahrrad soll erreicht werden, dass die Motoreinheit gegen Beschädigungen geschützt ist, wobei trotz der durch die Anordnung des Motors des bekannten Motorfahrrades erzielte Verbesserung der Manövrierbarkeit des Motorfahrrads die Verringerung des Rotationsträgheitsmoments um die Drehachse bei dem bekannten Motorfahrrad keine Rolle spielt. Darüber hinaus ist auch das Kriterium eines neutralen Fahrverhaltens bei dem vorstehend beschriebenen bekannten Motorfahrrad nicht von Bedeutung.

Anhand der JP 60 1168 25 A ist ein Motorrad mit einem Einzylinder-Zweitaktmotor bekannt geworden, dessen Zylinderlängsachse in einem Winkel von etwa 7 °zur Horizontalen geneigt angeordnet ist. Mit dieser Motoranordnung soll die Kompaktheit des Motors verbessert werden und darüber hinaus soll durch den Einbau von Membranventilen im Einlass die Motorleistung erhöht werden. Über die Lage des Schwerpunkts des bekannten Motorrads gibt die Druckschrift keine Auskunft und die Lage wird auch nicht thematisiert.

Anhand der JP 60 0931 28 A ist ein Zweizylinder-Zweitaktmotor bekannt geworden, wobei jedem Zylinder eine Kurbelwelle zugeordnet ist. Mit dieser Konfiguration sollen die Abmessung des Motors in Breitenrichtung verringert werden.

Anhand der US 20061283418 A1 ist der Antriebsmotor eines Vergnügungsfahrzeugs in der Form eines ATV's bekannt geworden, bei dem das Kurbelhaus des Antriebsmotors oberhalb des Getriebegehäuses angeordnet ist und die Zylinderlängsachse weitgehend in Längsrichtung des oder geringfügig in Richtung nach oben im Winkel zum Fahrzeugkörper des Vergnügungsfahrzeugs ausgerichtet ist. Mit dieser bekannt gewordenen Motorkonfiguration sollen die vom Fahrer des Fahrzeugs spürbaren Motorvibrationen verringert werden, so dass es möglich sein soll, auf ein Ausgleichsgewicht zu verzichten.

Anhand der FR-A-2 405 860 ist ein Geländersportmotorrad vorgesehen, welches einen innerhalb der Rahmenstruktur angeordneten Luftführungskanal besitzt mit einem innen liegenden Luftfilterelement.

Anhand der EP-A-0 602 591 ist ein Motorrad mit einer Luftfiltereinrichtung bekannt geworden, welche an seitlichen Bereichen und am hinteren Bereich vom Kraftstofftank des Motorrads umgeben ist und einen an einem Zwischenboden einstückig angeordneten Luftführungskanal aufweist, der sich in Richtung nach unten erstreckt und einen in Richtung zum Motor hin gekrümmt ausgebildeten Luftführungskanal aufweist.

Schließlich ist anhand der EO 9956997 Aein Geländersportmotorrad vorgesehen, welches einen Verbrennungsmotor aufweist mit einer leicht in Fahrtrichtung des Motorrads nach vorne gekippten Zylinderhochachse und einem mit dem Hauptrahmen verschraubbaren Hilfsrahmen, der auch den Motor trägt.

Der vorliegenden Erfindung liegt nunmehr die Aufgabe zugrunde, ein Motorrad derart weiterzubilden, dass es ein verbessertes Fahrverhalten besitzt und auch auf unbefestigter Fahrbahn mit hoher Dynamik bewegt werden kann und trotzdem ein neutrales Fahrverhalten besitzt.

Die Erfindung schafft nun zur Lösung dieser Aufgabe ein Motorrad mit den Merkmalen des Anspruchs 1. Vorteilhafte Ausgestaltungen hiervon sind in den weiteren Ansprüchen beschrieben.

Die Erfindung sieht nun ein Motorrad vor mit einem Rahmen und einem Vorderrad sowie einem Hinterrad und einer Brennkraftmaschine mit mindestens einem Zylinder und einer Kurbelwelle sowie einem mit der Brennkraftmaschine gekoppelten Getriebe mit einer Getriebeeingangswelle und einer Getriebeausgangswelle, wobei die Kurbelwelle der Brennkraftmaschine in Längsrichtung des Motorrads oberhalb und hinterhalb der Getriebeeingangswelle quer zur Längsrichtung angeordnet ist und eine Drehachse (19) der Kurbelwelle (7) in Längsrichtung des Motorrads (1) unterhalb und hinterhalb eines Schwerpunkts (18) des Motorrads (1) angeordnet ist.

Das erfindungsgemäße Motorrad besitzt also eine Brennkraftmaschine, deren Abtriebsleistung über ein damit gekoppeltes Getriebe in Richtung zum Hinterrad des Motorrads übertragen werden kann. Bei einer bekannten gattungsgemäßen Konfiguration befindet sich die Kurbelwelle der Brennkraftmaschine in Fahrtrichtung des Motorrads, also in Längsrichtung des Motorrads, vor der Getriebeeingangswelle angeordnet und weist daher vom Schwerpunkt des Motorrads einen großen Abstand auf. Dadurch, dass nach der erfindungsgemäßen Konfiguration die Kurbelwelle um die Getriebeeingangswelle herum entgegen der Längsrichtung des Motorrads nach hinten gedreht worden ist, so dass sie nun oberhalb und hinterhalb der Getriebeeingangswelle quer zur Längsrichtung des Motorrads angeordnet ist, ist die Kurbelwelle deutlich näher zum Schwerpunkt des Motorrads hin verlagert worden, oder kann mit ihrem Schwerpunkt mit dem Schwerpunkt des Motorrads zusammenfallen, so dass der Abstand des Schwerpunkts der Kurbelwelle vom Schwerpunkt des Motorrads verglichen mit dem bekannten Motorrad deutlich verringert werden konnte.

Durch den Schwerpunkt des Motorrads läuft die Querachse, um die das Motorrad eine Drehbewegung beim Bremsen und Beschleunigen ausführt. Wird nun ein solcher Beschleunigungsvorgang durchgeführt, so steht die volle Motorleistung der Brennkraftmaschine für den Vortrieb und damit die Vorwärtsbewegung des Motorrads erst dann zur Verfügung, wenn die Drehbewegung des Motorrads um die Querachse ist. Wird nun das Massenträgheitsmoment um die Querachse verringert, so ist die Drehbewegung schneller abgeschlossen und es steht die volle Motorleistung für die Vorwärtsbewegung schneller zur Verfügung. Hierdurch kann mit dem erfindungsgemäßen Motorrad verglichen mit einem bekannten Motorrad bei Wettbewerbsfahrten bereits ein Zeitvorteil erreicht werden. Darüber hinaus benötigt das erfindungsgemäße Motorrad für den Abschluss der Drehbewegung um die Querachse weniger Zeit als dies beim bekannten Motorrad der Fall ist.

Auch lässt sich durch die erfindungsgemäße Konfiguration die Radlastverteilung durch eine Änderung der Abtriebsleistung der Brennkraftmaschine des Motorrads schneller verändern, da die Drehbewegung um die Querachse schneller abgeschlossen ist.

Wird mit dem erfindungsgemäßen Motorrad beispielsweise im unbefestigten Gelände ein Sprung durchgeführt, so kann die Lage des Motorrads in der Luft schneller korrigiert werden, als dies bei einem bekannten Motorrad mit höherem Trägheitsmoment um die Querachse der Fall ist. Je geringer das Massenträgheitsmoment des Motorrads um die Querachse ist, desto besser und leichter lässt sich das Motorrad manövrieren. Dies ist insbesondere bei Motorrädern für Sportwettbewerben von Vorteil, da bei einem solchen Motorrad auch der Bodenkontakt häufiger verloren geht und eine gute Manövrierbarkeit des Motorrads auch in der Luft von wesentlicher Bedeutung ist.

Ist das Massenträgheitsmoment des Motorrads um die Querachse niedriger, so kann durch ein kurzzeitiges Gasgeben die Lage des Motorrads in der Luft durch eine Erhöhung der Drehzahl des Hinterrads des Motorrads schneller korrigiert werden als dies bei dem bekannten Motorrad der Fall ist, indem das Vorderrad des Motorrads als Gegenreaktion auf die Erhöhung des Rotationsträgheitsmoments des Hinterrads in der Luft angehoben wird und dadurch die Lage des Motorrads bei einer Landung nach dem Sprung verbessert werden kann. Da auch die Drehbewegung des Motorrads nach der Beendigung des Sprungs und der Landung schneller abgeschlossen ist, als dies bei bekannten Motorrädern der Fall ist, kann mit dem erfindungsgemäßen Motorrad verglichen mit einem bekannten Motorrad auch schneller sofort wieder voll beschleunigt werden.

Nach einer Weiterbildung der Erfindung ist es vorgesehen, dass die Kurbelwelle der Brennkraftmaschine in Längsrichtung des Motorrads zwischen der Getriebeeingangswelle und der Getriebeausgangswelle angeordnet ist. Die Kurbelwelle befindet sich also oberhalb der Getriebeeingangswelle und auch oberhalb der Getriebeausgangswelle angeordnet und zwar in Längsrichtung des Motorrads dazwischen. Befindet sich also bei einem bekannten Motorrad mit einer vor der Getriebeeingangswelle in Fahrzeuglängsrichtung angeordneten Kurbelwelle der Gesamtschwerpunkt des Motorrads, durch den die Querachse verläuft, um die herum das Motorrad eine Drehbewegung ausführt, innerhalb des sogenannten Rahmendreiecks, so wird durch die Verlagerung der Kurbelwelle des Motorrads in Richtung oberhalb und hinterhalb der Getriebeeingangswelle bezogen auf die Längsrichtung des Motorrads zwar auch der Schwerpunkt des Motorrads angehoben, die Kurbelwelle besitzt aber einen deutlich geringeren Abstand zum Schwerpunkt, als dies bei der bekannten Konfiguration der Fall ist. Die erfindungsgemäße Konfiguration führt nun dazu, dass die Drehachse der Kurbelwelle benachbart zum Schwerpunkt des Motorrads verläuft. Sie kann sich auch mit der durch den Schwerpunkt des Motorrads verlaufenden Drehachse decken.

Nach einer Ausführungsform gemäß der vorliegenden Erfindung ist es vorgesehen, dass sich die Drehachse der Kurbelwelle in Längsrichtung des Motorrads unterhalb und hinterhalb des Schwerpunkts des Motorrads angeordnet befindet. Damit ist aber der Abstand der Drehachse der Kurbelwelle zum Schwerpunkt des Motorrads deutlich kleiner, als dies bei einer in Längsrichtung des Motorrads vor der Getriebeeingangswelle angeordneten Kurbelwelle der Fall ist.

Nach einer Weiterbildung der Erfindung ist es vorgesehen, dass eine Ausgleichswelle der Brennkraftmaschine oberhalb der Kurbelwelle angeordnet ist. Dies führt zu der Konfiguration, dass sich die mit einer Eigenmasse zum Massenausgleich der Brennkraftmaschine versehene Ausgleichswelle näher zum Schwerpunkt und damit zur Drehachse des Motorrads angeordnet befindet, als dies bei einem bekannten Motorkonzept der Fall ist, bei dem sich die Ausgleichswelle beispielsweise in Längsrichtung des Motorrads betrachtet vor oder hinter der Kurbelwelle angeordnet befindet.

Um nun den durch die erfindungsgemäße Anordnung der Kurbelwelle gewonnenen Bauraum auszunutzen, ist es nach einer Weiterbildung der Erfindung vorgesehen, dass eine elektrische Startvorrichtung der Brennkraftmaschine in Längsrichtung des Motorrads vor der Getriebeeingangswelle und unterhalb des Zylinders angeordnet ist.

Der Zylinder der Brennkraftmaschine verläuft nach einer Weiterbildung der Erfindung mit seiner Längsachse in einem Winkel von 0 Grad bis 20 Grad relativ zur Horizontalen nach oben geneigt angeordnet, so dass auch bei einem großen Einzelhubraum der Brennkraftmaschine mit beispielsweise mehr als 500 cm³ und einem entsprechend großen Kolbenhub dafür Sorge getragen werden kann, dass ein Gaswechselbauteile der Brennkraftmaschine enthaltender Zylinderkopf nicht mit einem beispielsweise unteren Rahmenunterzug des Rahmens des Motorrads kollidiert oder vor der Brennkraftmaschine in Fahrtrichtung des Motorrads angeordneten Wärmetauschern.

Nach einer Ausführungsform gemäß der vorliegenden Erfindung ist es vorgesehen, dass sich eine Drehachse der Kurbelwelle im Abstand von etwa bis zu 200 mm vom Schwerpunkt des Motorrads angeordnet befindet, sich die Drehachse der Kurbelwelle also in Überdeckung befinden kann mit dem Schwerpunkt des Motorrads oder einen Abstand von bis zu 200 mm dazu besitzt, vorzugsweise einen Abstand von kleiner gleich 100 mm besitzt, vorzugsweise beispielsweise einen Abstand von 0 mm bis etwa 92,85 mm aufweist.

Durch die nach einer Weiterbildung der Erfindung vorgesehene Neigung des Zylinders entlang seiner Längsachse in einem Winkel von beispielsweise bis zu 20 Grad relativ zur Horizontalen nach oben wird auch erreicht, dass ein Luftansaugweg von einer Gemischaufbereitungsvorrichtung der Brennkraftmaschine in Form beispielsweise eines Vergaserkörpers oder eines Drosselklappenkörpers zu einer mit einem Filterelement zur Filterung von Ansaugluft der Brennkraftmaschine versehenen Luftansaugvorrichtung kurz gehalten werden kann.

Zu diesem Zweck kann die Luftansaugvorrichtung der Brennkraftmaschine mit einem Filterelement zur Filterung von Ansaugluft oberhalb des Zylinders angeordnet sein und ein Filterelement aufweisen, welches innerhalb einer einstückig mit einem Kraftstofftank des Motorrads ausgebildeten Filterelementaufnahme angeordnet ist.

Durch diese Konfiguration wird ein kurzer Ansaugweg aus dem Reinluftbereich zur Gemischaufbereitungsvorrichtung des Motorrads erreicht, so dass es dadurch auch möglich ist, den Reinluftbereich nach dem Filterelement durch einen Elastomerkörper auszubilden, der in die Filterelementaufnahme eingesetzt werden kann und trotz seiner Elastizität aufgrund des kurzen Ansaugwegs zwischen dem Filterelement und der Gemischaufbereitungsvorrichtung nicht zu die Leistungsentfaltung der Brennkraftmaschine störenden Pulsationen neigt.

Die derart vorgesehene Luftansaugvorrichtung kann sich weitgehend unterhalb einer Sitzbank des Motorrads angeordnet befinden, so dass durch die lang gestreckte Konfiguration der Sitzbank auch die Ausbildung eines unterhalb der Sitzbank verlaufenden langen Ansaugluftkanals möglich ist, der aufgrund seiner lang gestreckten Konfiguration einerseits im niedrigen Drehzahlbereich der Brennkraftmaschine für einen Drehmomentanstieg sorgt und andererseits aufgrund seiner langgestreckten Konfiguration eine Ansauglänge zur Verfügung stellt, die zur Bedämpfung des Ansaugluftgeräusches der Brennkraftmaschine von Vorteil ist.

Die Veränderung der Position der Kurbelwelle in Richtung zum Schwerpunkt des Motorrads hin führt nun zu einer Verlagerung der rotierenden Massen zum Schwerpunkt hin, die sich auf das Fahrverhalten des Motorrads positiv auswirkt. Gleichzeitig führt dies dazu, dass ein Einlenkvorgang zur Richtungsänderung des Motorrads leichter durchzuführen ist bei hoher Motordrehzahl, als dies bei dem bekannten Motorrad der Fall ist. Die erfindungsgemäße Konfiguration führt auch dazu, dass bei einer Kurvenfahrt des Motorrads, also einer Fahrt mit Seitenneigung weniger Tendenz des Motorrads besteht, sich bei einer Beschleunigung und entsprechender Vergrößerung der Abtriebsleistung der Brennkraftmaschine sich um die Längsachse des Motorrads herum in Richtung zur Vertikalen hin aufzurichten, das Aufrichtmoment wird geringer. Das erfindungsgemäße Motorrad besitzt daher ein neutraleres Fahrverhalten, als das bekannte Motorrad und lässt sich insbesondere bei einer Kurvenfahrt und beispielsweise fahrbahnbedingter Lastwechselreaktionen einfacher und neutraler fahren, als dies beim bekannten Motorrad der Fall ist. Dieser Effekt verstärkt sich noch mit zunehmendem Hubraum der Brennkraftmaschine des Motorrads, da damit die Masse der Kurbelwelle ansteigt.

Die Erfindung wird nunmehr im Folgenden anhand der Zeichnung näher erläutert. Diese zeigt in:

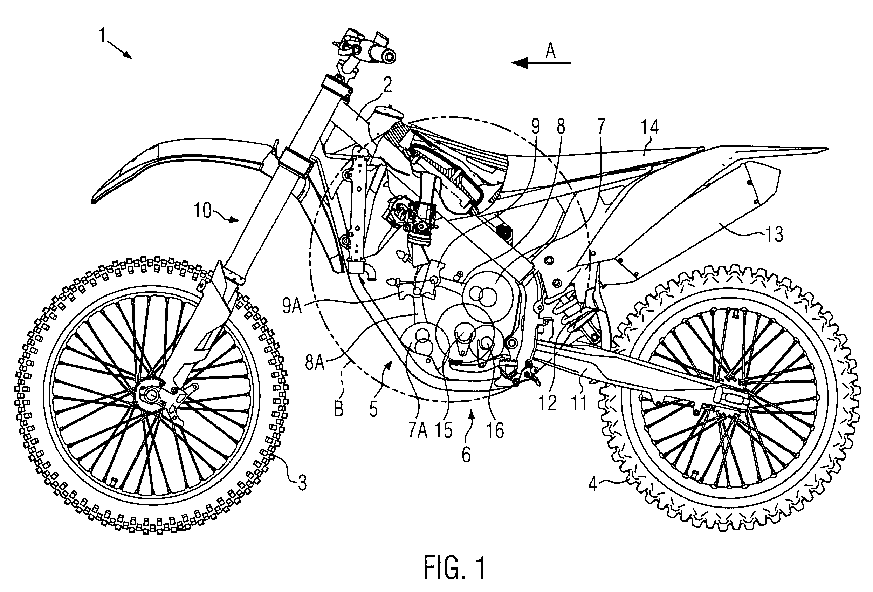

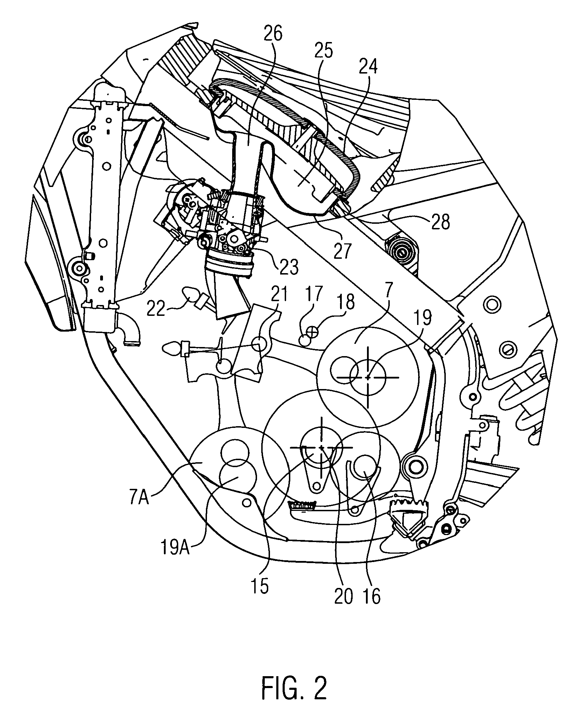

Fig. 1 eine Seitenansicht einer schematischen Darstellung eines Motorrads gemäß einer Ausführungsform nach der vorliegenden Erfindung mit einer oberhalb und hinterhalb einer Getriebeeingangswelle angeordneten Kurbelwelle sowie einer zu Referenzzwecken eingezeichneten Kurbelwellenposition eines bekannten Motorrads; und Fig. 2 eine vergrößerte Darstellung des strichpunktierten Ausschnitts nach Fig. 1.

Bei der in Fig. 1 der Zeichnung dargestellten Ausführungsform des Motorrads 1 wurden zur Vereinfachung der Darstellung Bauteile, wie beispielsweise Bremsscheiben oder eine Sekundärkette weggelassen. Das Motorrad 1 weist einen Rahmen 2, ein Vorderrad 3, ein Hinterrad 4, eine lediglich schematisch dargestellte Brennkraftmaschine 5 und ein ebenfalls lediglich schematisch dargestelltes Getriebe 6 auf.

Bei der dargestellten Ausführungsform besitzt die Brennkraftmaschine 5 nur einen Zylinder mit einer Kurbelwelle 7 und einem an der Kurbelwelle 7 über eine Pleuelstange 8 angelenkten Kolben 9.

Zur Verdeutlichung ist in der Zeichnung auch die Lage der Kurbelwelle 7A mit daran über eine Pleuelstange 8A angelenktem Kolben 9A dargestellt, wie dies bei einem bekannten Motorrad der Fall ist.

Neben den bereits beschriebenen Bauteilen sind in der Zeichnung noch weitere Komponenten des Motorrads 1 dargestellt, wie beispielsweise eine das Vorderrad 3 führende Teleskopgabel 10, eine das Hinterrad 4 führende Schwinge 11, ein Federdämpferelement 12, eine Abgasanlage 13 und ein Fahrersattel 14.

Mit dem Bezugszeichen 7A ist die Kurbelwelle eines bekannten Motorrads in einer bekannten Position dargestellt. Die Kurbelwelle 7A befindet sich dabei in Längsrichtung oder Fahrtrichtung des Motorrads 1 gemäß dem Pfeil A an einer Position vor und geringfügig unterhalb einer Getriebeeingangswelle 15 angeordnet. Die Getriebeeingangswelle 15 befindet sich in Fig. 1 der Zeichnung an einer Stelle angeordnet, an der sie sich sowohl bei einem bekannten Motorrad als auch bei dem erfindungsgemäßen Motorrad angeordnet befindet. Ebenfalls befindet sich eine Getriebeausgangswelle 16 an einer Stelle eingezeichnet, an der sie sich sowohl bei dem bekannten als auch bei dem erfindungsgemäßen Motorrad angeordnet befindet.

Fig. 2 der Zeichnung zeigt nun in einer vergrößerten Darstellung den durch den strichpunktierten Kreis in Fig. 1 ausgeschnittenen Bereich. Mit dem Bezugszeichen 17 ist die Lage des Schwerpunkts des bekannten Motorrads dargestellt mit der in bekannter Weise angeordneten Kurbelwelle 7A, während mit dem Bezugszeichen 18 die Position des Schwerpunkts des erfindungsgemäßen Motorrads dargestellt ist mit der relativ zur Getriebeeingangswelle 15 oberhalb und hinterhalb der Getriebeeingangswelle 15 verdrehten Position der Kurbelwelle 7.

Wie es ohne weiteres anhand von Fig. 1 und 2 der Zeichnung ersichtlich ist, befindet sich bei der erfindungsgemäßen Ausführungsform des Motorrads 1 die Kurbelwelle 7 in einer Position oberhalb und hinterhalb der Getriebeeingangswelle 15 angeordnet. Es bedeutet dies mit anderen Worten, dass die Drehachse 19 der Kurbelwelle 7 entgegen Richtung des Pfeiles A, der die Längsrichtung des Motorrads 1 repräsentiert, oberhalb und hinterhalb der Drehachse 20 der Getriebeeingangswelle 15 liegt. Die Position der Drehachse 19 und damit der Kurbelwelle 7 kann aus der Position der Drehachse 19A der Kurbelwelle 7A erreicht werden, indem die Kurbelwelle der Brennkraftmaschine aus der durch das Bezugszeichen 7A repräsentierten Lage in die durch die Position 7 repräsentierte Lage gedreht wird, indem die Drehachse 20 der Getriebeeingangswelle 15 als Drehpol verwendet wird.

Dadurch verringert sich der Abstand der Drehachse 19A vom Schwerpunkt 17, der bei der dargestellten bekannten Position der Kurbelwelle 7A etwa 196,6 mm beträgt, zu einem Abstand von etwa 92,85 mm der Drehachse 19 der Kurbelwelle 7 vom Schwerpunkt 18 des Motorrads 1.

Bewegt sich nun das dargestellte Motorrad 1 auf einer unebenen Fahrbahn, so führt der Schwerpunkt 18 eine Bewegung entlang der Hochachsrichtung des Motorrads 1 aus und das Motorrad führt auch Drehbewegungen um eine Querachse oder Drehachse durch, die durch den Schwerpunkt 18 verläuft und senkrecht auf der Zeichenebene steht.

Durch die Verlagerung der Kurbelwelle der Brennkraftmaschine aus der durch 7A repräsentierten Lage in die Lage 7 wurde bei ansonsten gleichen Abmessungen und Einzelmassen der Kurbelwelle, der Pleuelstange und des Kolbens eine Lage erreicht, die näher am Schwerpunkt 18 und damit am Drehpunkt des Motorrads 1 liegt.

Dadurch setzt das Motorrad 1 einer Drehbewegung um den Schwerpunkt 18 weniger Massenträgheitsmoment entgegen, als es im Falle der Drehung um den Schwerpunkt 17 mit der bekannten Konfiguration der Kurbelwelle, die durch das Bezugszeichen 7A dargestellt ist, der Fall ist.

Die erfindungsgemäße Konfiguration führt daher dazu, dass bei vergleichbarer Energie zur Drehung des Motorrads um den Schwerpunkt 17 und um den Schwerpunkt 18 die Drehung des Motorrads um den Schwerpunkt 18 schneller abläuft beziehungsweise weniger Energie notwendig ist, um eine vergleichbare Drehwinkelveränderung um den Schwerpunkt 18 zu erreichen, als um den Schwerpunkt 17.

Durch die Verlagerung der Kurbelwelle in die durch das Bezugszeichen 7 dargestellte Position setzt das erfindungsgemäße Motorrad einer Drehung um den Schwerpunkt 18 weniger Massenträgheitsmoment entgegen, als bei einer vergleichbaren Drehung um den Schwerpunkt 17 der Konfiguration, wie sie sich anhand der Anordnung der Kurbelwelle gemäß dem Bezugszeichen 7A darstellt.

Befindet sich im System Motorrad eine bestimmte Rotationsenergie, um den Schwerpunkt 17 beziehungsweise den Schwerpunkt 18, so dreht sich das Motorrad um den Schwerpunkt 18 schneller, als um den Schwerpunkt 17, eine vergleichbare Drehwinkelveränderung läuft daher um den Schwerpunkt 18 schneller ab, als um den Schwerpunkt 17. Das Motorrad 1 reagiert also bei einer Drehung um den Schwerpunkt 18 weniger träge, als das Motorrad, welches die bekannte Konfiguration mit dem Schwerpunkt 17 und der Kurbelwelle 7A aufweist.

Darüber hinaus wird durch die erfindungsgemäße Konfiguration auch erreicht, dass sich das Motorrad bei hoher Motordrehzahl und daher einem hohen Rotationsträgheitsmoment der Kurbelwelle 7 leichter zu einer Kurvenfahrt einlenken lässt, als es bei vergleichbarer Drehzahl der Kurbelwelle 7A der bekannten Konfiguration der Fall ist. Zudem besitzt das erfindungsgemäße Motorrad weniger Aufstellmoment bei einer Beschleunigung in der Kurvenfahrt und damit Schräglage, als das bekannte Motorrad.

Eine Verbindungsstrecke zwischen der Drehachse 19 der Kurbelwelle 7 und der Mitte eines Kolbenbolzens 21 repräsentiert in der Stellung des Kolbens 9 im oberen Totpunkt die Zylinderlängsachse der Brennkraftmaschine 5 des erfindungsgemäßen Motorrads. Diese liegt in einem Winkel von etwa 17 Grad relativ zur Horizontalen in Richtung nach oben verschwenkt, so dass sich ein lediglich schematisch dargestelltes Einlassventil 22 näher an einer Gemischaufbereitungsvorrichtung 23 in der Form eines Drosselklappenkörpers angeordnet befindet, als dies beim bekannten Motorrad der Fall ist.

Über den Drosselklappenkörper 23 wird der Brennkraftmaschine 5 ein Kraftstoff-LuftGemisch zugeführt und zwar derart, dass gereinigte Ansaugluft aus einem unterhalb eines Filterelements 24 einer Luftansaugvorrichtung angeordneten Reinluftbereich 25 über einen Ansaugstutzen 26 dem Drosselklappenkörper 23 zugeführt wird.

Der Reinluftbereich 25 wird dabei von einem Elastomerkörper 27 gebildet, der in eine Ausnehmung 28 der Luftansaugvorrichtung der Brennkraftmaschine eingesetzt werden kann und zwar so, dass der Elastomerkörper 27 den Reinluftbereich gegen die Umgebung abdichtet.

Die erfindungsgemäße Verlagerung der Kurbelwelle in eine Position oberhalb und hinterhalb der Getriebeeingangswelle führt auch dazu, dass die Brennkraftmaschine des erfindungsgemäßen Motorrads verglichen mit einer Brennkraftmaschine des bekannten Motorrads bei vergleichbarer Leistung weniger Bauraum einnimmt. Wird in einem Gedankenexperiment um die die Kurbelwelle 7A aufweisende bekannte Brennkraftmaschine ein Schrumpfraum gebildet und ein vergleichbarer Schrumpfraum auch um die die Kurbelwelle 7 aufweisende Brennkraftmaschine des Motorrads 1 nach der vorliegenden Erfindung, so ist der Schrumpfraum um die Brennkraftmaschine des erfindungsgemäßen Motorrads etwa 4,5 % kleiner als der Schrumpfraum um die Brennkraftmaschine mit der bekannten Konfiguration der Kurbelwelle 7A. Es bedeutet dies mit anderen Worten, dass durch die Verlagerung der Kurbelwellenposition auch weniger Bauraum der Brennkraftmaschine 5 innerhalb des Rahmens 2 benötigt wird.

Das Motorrad mit der erfindungsgemäßen Konfiguration der Lage der Kurbelwelle weist verglichen mit einem bekannten Motorrad in überraschender Weise mehrere Vorteile auf. Das Fahrverhalten des erfindungsgemäßen Motorrads ist bei einer Kurvenfahrt auch mit Lastwechseln neutraler, als das Fahrverhalten des bekannten Motorrads und die Lastwechsel führen zu weniger Veränderung des Aufstellmoments, als dies bei dem bekannten Motorrad der Fall ist. Wird mit dem erfindungsgemäßen Motorrad bei hoher Motordrehzahl eine Kurvenfahrt eingeleitet, so kann diese Kurvenfahrt vom Fahrer leichter eingeleitet werden, als bei dem Motorrad mit der bekannten Konfiguration. Damit sind kleine Richtungskorrekturen, wie sie beim Fahren im unbefestigten Gelände häufig auftreten, vom Fahrer leichter herbeizuführen, als dies beim Motorrad mit der bekannten Konfiguration der Fall ist. Fährt der Fahrer mit dem erfindungsgemäßen Motorrad in Schräglage, so führt eine Beschleunigung zu weniger Aufstellmoment, als dies beim bekannten Motorrad der Fall ist. All diese Vorteile führen dazu, dass sich das erfindungsgemäße Motorrad beim Fahren für den Fahrer wesentlich leichter und handlicher anfühlt, als dies beim bekannten Motorrad der Fall ist. Das erfindungsgemäße Motorrad reagiert auf vom Fahrer oder von der Bodenoberfläche induzierte Lastwechselveränderungen neutraler, als das bekannte Motorrad und ist daher auch einfacher zu steuern. Schließlich ergibt sich dadurch, dass Drehbewegungen des Motorrads um die Querachse des Schwerpunkts herum schneller ablaufen, als dies beim bekannten Motorrad der Fall ist, auch verglichen mit der bekannten Konfiguration ein Zeitvorteil bei Wettbewerbsfahrten.

Hinsichtlich vorstehend im Einzelnen nicht näher erläuterter Merkmale der Erfindung wird im Übrigen ausdrücklich auf die Ansprüche und die Zeichnung verwiesen.

### Bezugszeichenliste

- 1: Motorrad
- 2: Rahmen
- 3: Vorderrad
- 4: Hinterrad
- 5: Brennkraftmaschine
- 6: Getriebe
- 7: Kurbelwelle
- 7A: Kurbelwelle
- 8: Pleuelstange
- 8A: Pleuelstange
- 9: Kolben
- 9A: Kolben
- 10: Teleskopgabel
- 11: Schwinge
- 12: Federdämpferelement
- 13: Abgasanlage
- 14: Fahrersattel
- 15: Getriebeeingangswelle
- 16: Getriebeausgangswelle
- 17: Schwerpunkt
- 18: Schwerpunkt
- 19: Drehachse
- 19A: Drehachse
- 20: Drehachse
- 21: Kolbenbolzen
- 22: Einlassventil
- 23: Gemischaufbereitungsvorrichtung/Drosselklappenkörper
- 24: Filterelement
- 25: Reinluftbereich
- 26: Ansaugstutzen
- 27: Elastomerkörper
- 28: Ausnehmung
- A: Längsrichtung

## Patentansprüche

1. Motorrad mit einem Rahmen (2) und einem Vorderrad (3) sowie einem Hinterrad (4) und einer Brennkraftmaschine (5) mit mindestens einem Zylinder und einer Kurbelwelle (7) sowie einem mit der Brennkraftmaschine (5) gekoppelten Getriebe (6) mit einer Getriebeeingangswelle (15) und einer Getriebeausgangswelle (16), wobei die Kurbelwelle (7) in Längsrichtung des Motorrads (1) oberhalb und hinterhalb der Getriebeeingangswelle (15) quer zur Längsrichtung angeordnet ist, **dadurch gekennzeichnet, dass** eine Drehachse (19) der Kurbelwelle (7) in Längsrichtung des Motorrads (1) unterhalb und hinterhalb eines Schwerpunkts (18) des Motorrads (1) angeordnet ist.

2. Motorrad nach Anspruch 1, **dadurch gekennzeichnet, dass** die Kurbelwelle (7) in Längsrichtung des Motorrads (1) zwischen der Getriebeeingangswelle (15) und der Getriebeausgangswelle (16) angeordnet ist.

3. Motorrad nach Anspruch 1 oder 2, **dadurch gekennzeichnet, dass** eine Drehachse (19) der Kurbelwelle (7) benachbart zu einem Schwerpunkt (18) des Motorrades (1) angeordnet ist.

4. Motorrad nach einem der vorstehenden Ansprüche, **dadurch gekennzeichnet, dass** eine Ausgleichswelle der Brennkraftmaschine (5) oberhalb der Kurbelwelle (7) angeordnet ist.

5. Motorrad nach einem der vorstehenden Ansprüche, **dadurch gekennzeichnet, dass** eine elektrische Startvorrichtung der Brennkraftmaschine (5) in Längsrichtung des Motorrads (1) vor der Getriebeeingangswelle (15) und unterhalb des Zylinders angeordnet ist.

6. Motorrad nach einem der vorstehenden Ansprüche, **dadurch gekennzeichnet, dass** eine Längsachse des Zylinders der Brennkraftmaschine (5) in einem Winkel von 0 Grad bis 20 Grad relativ zur Horizontalen nach oben geneigt angeordnet ist.

7. Motorrad nach einem der vorstehenden Ansprüche, **dadurch gekennzeichnet, dass** eine Drehachse der Kurbelwelle (7) im Abstand von 0 mm bis etwa 200 mm vom Schwerpunkt des Motorrads (1) angeordnet ist.

8. Motorrad nach einem der vorstehenden Ansprüche, **dadurch gekennzeichnet, dass** eine Luftansaugvorrichtung der Brennkraftmaschine (5) mit einem Filterelement (24) zur Filterung von Ansaugluft der Brennkraftmaschine (5) oberhalb des Zylinders angeordnet ist.

9. Motorrad nach einem der vorstehenden Ansprüche, **dadurch gekennzeichnet, dass** ein Filterelement (24) zur Filterung von Ansaugluft der Brennkraftmaschine (5) innerhalb einer einstückig mit einem Kraftstofftank des Motorrads (1) ausgebildeten Filterelementaufnahme angeordnet ist.

10. Motorrad nach Anspruch 8 oder 9, **dadurch gekennzeichnet, dass** die Luftansaugvorrichtung einen Elastomerkörper (27) aufweist, der gefilterte Ansaugluft von der Luftansaugvorrichtung zu einer an der Brennkraftmaschine (5) angeordneten Gemischaufbereitungsvorrichtung (23) führt.

## Claims

1. A motorcycle having a frame (2) and a front wheel (3) and a rear wheel (4) and an internal combustion engine (5) with at least one cylinder and a crankshaft (7) and a gearbox (6) coupled to the internal combustion engine (5) and having a gearbox input shaft (15) and a gearbox output shaft (16), wherein the crankshaft (7) is arranged above and behind the gearbox input shaft (15) in the longitudinal direction of the motorcycle (1) and transversely to the longitudinal direction, **characterised in that** a rotational axis (19) of the crankshaft (7) is arranged below and behind a centre of gravity (18) of the motorcycle (1) in the longitudinal direction of the motorcycle (1).

2. The motorcycle according to Claim 1, **characterised in that** the crankshaft (7) is arranged between the gearbox input shaft (15) and the gearbox output shaft (16) in the longitudinal direction of the motorcycle (1).

3. The motorcycle according to Claim 1 or 2, **characterised in that** a rotational axis (19) of the crankshaft (7) is arranged adjacently to a centre of gravity (18) of the motorcycle (1).

4. The motorcycle according to one of the preceding claims, **characterised in that** a balance shaft of the internal combustion engine (5) is arranged above the crankshaft (7).

5. The motorcycle according to one of the preceding claims, **characterised in that** an electrical starting device of the internal combustion engine (5) is arranged in front of the gearbox input shaft (15) in the longitudinal direction of the motorcycle (1) and below the cylinder.

6. The motorcycle according to one of the preceding claims, **characterised in that** a longitudinal axis of the cylinder of the internal combustion engine (5) is arranged inclined upwards at an angle of 0 to 20 degrees relatively to the horizontal.

7. The motorcycle according to one of the preceding claims, **characterised in that** a rotational axis of the crankshaft (7) is arranged at a distance of 0 mm to approximately 200 mm from the centre of gravity of the motorcycle (1).

8. The motorcycle according to one of the preceding claims, **characterised in that** an air intake device of the internal combustion engine (5) with a filter element (24) for filtering intake air of the internal combustion engine (5) is arranged above the cylinder.

9. The motorcycle according to one of the preceding claims, **characterised in that** a filter element (24) for filtering intake air of the internal combustion engine (5) is arranged inside a filter element mounting which is constructed in one piece with a fuel tank of the motorcycle (1).

10. The motorcycle according to Claim 8 or 9, **characterised in that** the air intake device has an elastomer body (27), which guides filtered intake air from the air intake device to a mixture-preparation device (23) arranged on the internal combustion engine (5) .

## Revendications

1. Moto, avec un cadre (2) et une roue avant (3) ainsi qu'une roue arrière (4) et un moteur thermique (5) avec au moins un cylindre et un vilebrequin (7), ainsi qu'avec une boîte de vitesses (6) accouplée au moteur thermique (5), avec un arbre d'entrée (15) de boîte et un arbre de sortie (16) de boîte, le vilebrequin (7) étant placé dans la direction longitudinale de la moto (1), au-dessus et à l'arrière de l'arbre d'entrée (15) de boîte, à la transversale de la direction longitudinale, **caractérisée en ce qu'**un axe de rotation (19) du vilebrequin (7) est placé en direction longitudinale de la moto (1) en-dessous et à l'arrière d'un barycentre (18) de la moto (1).

2. Moto selon la revendication 1, **caractérisée en ce que** dans la direction longitudinale de la moto (1), le vilebrequin (7) est placé entre l'arbre d'entrée (15) de boîte et l'arbre de sortie (16) de boîte.

3. Moto selon la revendication 1 ou la revendication 2, **caractérisée en ce qu'**un axe de rotation (19) du vilebrequin (7) est placé au voisinage d'un barycentre (18) de la moto (1).

4. Moto selon l'une quelconque des revendications précédentes, **caractérisée en ce qu'**un arbre compensateur du moteur thermique (5) est placé au-dessus du vilebrequin (7).

5. Moto selon l'une quelconque des revendications précédentes, **caractérisée en ce que** dans la direction longitudinale de la moto (1), un dispositif de démarrage électrique du moteur thermique (5) est placé à l'avant de l'arbre d'entrée (15) de boîte et en-dessous du cylindre.

6. Moto selon l'une quelconque des revendications précédentes, **caractérisée en ce qu'**un axe longitudinal du cylindre du moteur thermique (5) est placé en étant incliné vers le haut sous une angle de 0 degré à 20 degrés par rapport à l'horizontale.

7. Moto selon l'une quelconque des revendications précédentes, **caractérisée en ce qu'**un axe de rotation du vilebrequin (7) est placé avec un écart de 0 mm à environ 200 mm du barycentre de la moto (1).

8. Moto selon l'une quelconque des revendications précédentes, **caractérisée en ce qu'**un dispositif d'aspiration d'air du moteur thermique (5) avec un élément filtrant (24) destiné à filtrer l'air aspiré par le moteur thermique (5) est placé au-dessus du cylindre.

9. Moto selon l'une quelconque des revendications précédentes, **caractérisée en ce qu'**un élément filtrant (24) destiné à filtrer l'air aspiré par le moteur thermique (5) est placé à l'intérieur d'un réceptacle d'élément filtrant conçu en monobloc avec un réservoir à carburant de la moto (1).

10. Moto selon la revendication 8 ou la revendication 9, **caractérisée en ce que** le dispositif d'aspiration d'air comporte un organe en élastomère (27), qui conduit de l'air aspiré filtré du dispositif d'aspiration d'air vers un dispositif de préparation d'un mélange (23) placé sur le moteur thermique (5).
